# EUROPEAN PATENT APPLICATION

(11) **EP 3 308 664 A1**
(43) Date of publication of application: **18.04.2018**
(21) Application number: 17020031.5
(22) Date of filing: 26.01.2017
(51) Int. Cl.: A43B 1/00, A43B 13/04, A43B 13/38, B29D 35/10, B29D 35/12, B29D 35/14, A43B 19/00, A43B 9/02

(54) **COMPREHENSIVE WRAPPING AND ENVIRONMENT-FRIENDLY SHOES AND PRODUCTION PROCESS THEREOF**

(30) Priority: 13.10.2016 CN 201610892053; 13.10.2016 CN 201610892312
(71) Applicant: Chen, Maoshuang, Fuzhou, Fujian (CN)
(72) Inventor: Chen, Maoshuang, Fuzhou, Fujian (CN)
(74) Representative: Meyer, Thorsten

(57) **Abstract**

Comprehensive wrapping and environment-friendly shoes and a production process thereof are provided. Each shoe comprises an upper (1) and a sole (2), and the upper (1) includes an inner bootie (11) and a vamp (12); the inner bootie (11) includes a lining (11A, 11) and a PU inner pad (11B) which are connected; the collars of the inner bootie (11) and the vamp (12) are connected, and the vamp (12) lower edge extends to the inner pad (11B) bottom surface and is connected therewith. The making process is simple and can save sole (2) laying and insole assembly procedures and simplify the upper (1) marking procedure; the inner bootie (11) enables the upper (1) and the sole (2) to be completely attached to a last, realizes good wearing comfort and barefoot feeling, achieves maximum sports shock absorbing and assisting function and comfortably wraps the foot; and by reducing EVA & RB materials and increasing PU material, the dissolution proportion of the shoes is increased, and the shoes are more environment-friendly.

## Description

### Field of the Invention

The present invention relates to a pair of bridging shoes and a production process thereof, and particularly relates to a pair of comprehensive wrapping and environment-friendly bridging shoes and a production process thereof.

### Background of the Invention

Sports shoes in the current market are all equipped with insoles, but the top surfaces of most insoles are planar at present, so that the insoles are difficult in fitting the feet, and the wearing comfort is unsatisfactory; although the upper surfaces of part of insoles are designed into concave structures with improved foot fitness, the fitness of such insoles is still difficult to reach an excellent state; moreover, the insoles are separated from uppers, so certain included angles are formed at the junctions of the edges of the insoles and the uppers, and these parts are difficult in fitting the feet; and due to the mobility of the insoles in the separated structures, it is difficult to keep each insole at one position, and then the insoles and the feet cannot stably and quickly reach a good fitting state. Thus, most of the shoes in the current market cannot wrap the feet ideally, and the requirement for comfort is difficult to meet.

In addition, wrapping of most uppers at present on insteps is adjusted via the tightness of shoelaces. However, the shoes with shoelaces need to be equipped with tongues, and the blocking effect of the tongues necessarily results in gaps which are difficult to eliminate between the uppers and the insteps and then influences the wrapping property of the uppers.

Moreover, the main bodies of current common insoles are all made of a foaming material, so that the insoles have certain cushioning performance, but the insoles are always thin, the shock absorbing performance of shoes mainly depends on thick soles, and the solubility of the foaming material and the rubber material for the insoles and the soles is not ideal, so the environment friendliness is not ideal.

### Summary of the Invention

The present invention provides a pair of comprehensive wrapping and environment-friendly shoes for solving the problems that the uppers of most existing shoes cannot wrap the feet in an excellent state and the environment friendliness is not ideal.

The present invention adopts the following technical solution:

A pair of comprehensive wrapping and environment-friendly shoes, each including an upper and a sole, wherein the upper is composed of an inner bootie and a vamp. The inner bootie is composed of a lining and an inner pad which is formed by one-step injection molding, the inner pad is a PU inner pad made of a PU material or a popcorn inner pad made of mixed PU and TPU popcorn particles. The lining and the inner pad are connected into a whole by injection molding. The collar of the inner bootie is fixedly connected with the collar of the vamp, and the lower edge of the vamp extends to the bottom surface of the inner pad and is fixedly connected with the inner pad.

Further:
The upper is connected with the sole into a whole by a PU bridging layer, and the PU bridging layer wraps the lower edge of the vamp.

The thickness of the inner pad is 10~20mm.

The lining is of a foot cover structure in a sock shape, or a lining structure of a common upper.

The lining is made of a waterproof and/or breathable fabric.

A making process for the comprehensive wrapping and environment-friendly shoes sequentially includes the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the cavity of the mold; transferring the mold to a heating box, heating the mold to 60~80°C, transferring the mold after 4~8 minutes to a cooling box of -10~0°C, and rapidly cooling the mold for 2~5 minutes; thus obtaining the inner bootie after de-molding;
b. upper: stitching the collar of the inner bootie with the collar of a vamp using a stitching machine according to the collar radian, and then covering the inner bootie with the vamp to obtain the upper; and
c. molding: placing a sole on a specified mold groove in a PU injection mold cavity; then putting the upper on a shoe last, hanging the upper put on the last onto a mold base of an upper connecting injection molding machine using an air valve device, fixing the upper put on the last with a pneumatic last clamping valve device, and then closing the mold; heating the mold to 60~80°C, then injecting the PU raw material into the mold cavity, foaming and curing the PU raw material for 5~8 minutes, opening the mold to take out a finished product, and trimming burrs.

The sole is produced using a 1:1 mold according to the shape in the mold groove, thereby ensuring that the accurate error of the sole is within 1mm; and the edge of the sole is tightly connected with the mold groove.

It can be known from the above structural description of the present invention that compared with the prior art, the present invention has the following advantages:
1. The shoe making process of the present invention is simpler than the traditional shoe making process, can save the procedures of sole laying and insole assembly, and can simplify the upper making procedure.
2. The mold kernel is designed and made according to the foot shape of human mechanics, and the inner bootie is made by an integral molding process in the mold, so that the foot can be placed in a most comfortable and matchable space, and the forefoot to the heel is perfectly wrapped; and the vamp and the sole are completely attached to the last, so that the wearing comfort is very good and then a barefoot feeling is realized.
3. By changing the thickness, density, hardness and wrapping property of the inner pad according to different sports functions, the inner bootie achieves a maximum sports shock absorbing and assisting function and comfortably wraps the foot.
4. Manual sole laying is not needed, so that the processing efficiency is effectively improved, the problems of glue overflow, glue insufficiency and the like caused by manual sole laying are solved, and the vamp is very clean and good in pull; and no glued layer exists between the upper and the sole, so that the elasticity of the sole is guaranteed.
5. The thickness 4~6mm of the traditional insole is adjusted to the thickness 10~20mm of the inner pad of the present invention by adjusting the radian of the keel of the PU mold, and the thicknesses of the EVA sole and the RB sole sheet are reduced, so that the elasticity and the comfort of the feet in the moving process are greatly strengthened; and by reducing the consumption of EVA and RB materials and increasing the consumption of the PU material, the dissolution proportion of a pair of shoes is increased, and the environment-friendly function is effectively promoted.

### Brief Description of the Drawings

Fig. 1 is a structural schematic diagram of an inner bootie of the present invention.
Fig. 2 is a schematic diagram of a section structure of the inner bootie of the present invention at the position A-A in Fig. 1.
Fig. 3 is a structural schematic diagram of an upper put on a last of the present invention.
Fig. 4 is a schematic diagram of a cross section structure of a bridging shoe of the present invention at the collar.

### Detailed Description of the Embodiments

Specific embodiments of the present invention will be described below with reference to the accompanying drawings.

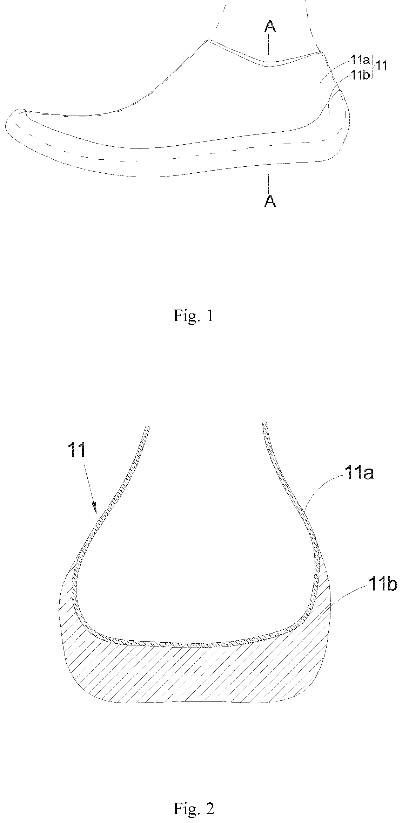

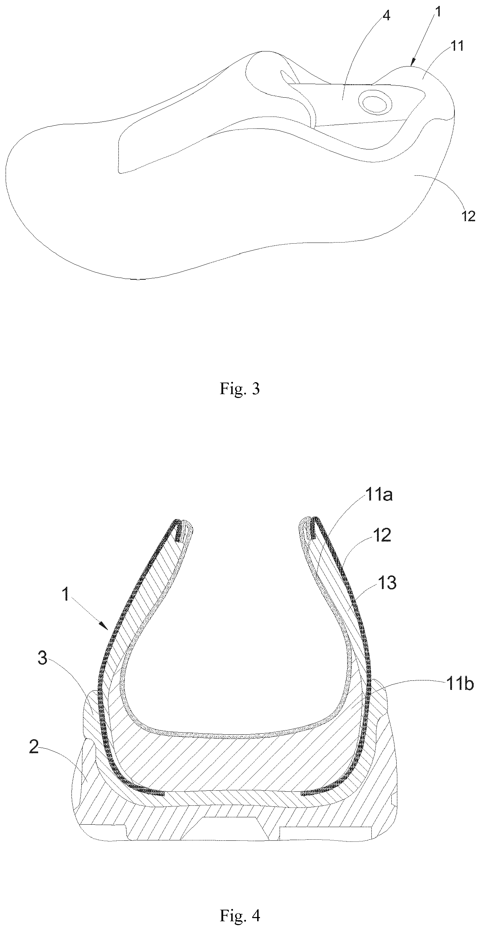

See Fig. 4, a pair of comprehensive wrapping and environment-friendly shoes, each including an upper 1 and a sole 2, wherein the upper 1 is composed of an inner bootie 11 and a vamp 12. See Fig. 1 and Fig. 2, the inner bootie 11 is composed of a lining 11a and an inner pad 11b which is formed by one-step injection molding. The inner pad 11b is a PU inner pad 11b made of a PU material, or a popcorn inner pad 11b made of mixed PU and TPU popcorn particles, and the thickness of the inner pad 11b is 10~20mm. The lining 11a is of a foot cover structure in a sock shape, or of a structure that the collar and the bottom of the lining of a common upper 1 are opened; and the lining 11a is made of a waterproof and/or breathable fabric. The lining 11a and the inner pad 11b are connected into a whole by injection molding. See Fig. 3 and Fig. 4, the collar of the inner bootie 11 is fixedly connected with the collar of the vamp 12, and the lower edge of the vamp 12 extends to the bottom surface of the inner pad 11b and is fixedly connected with the inner pad 11b. See Fig. 4, the upper 1 is connected with the sole 2 into a whole by a PU bridging layer 3, and the PU bridging layer 3 wraps the lower edge of the vamp 12.

In addition, a making process for the comprehensive wrapping and environment-friendly shoes sequentially includes the following steps:
a. inner bootie 11: see Fig. 1 and Fig. 2, making a 1:1 mold kernel according to the foot shape, covering the mold kernel with a lining 11a, and conveying the mold kernel to a specified station of an injection mold, wherein the shapes of the mold kernel and the lining 11a can be adjusted according to different foot shapes; then pouring a PU raw material or a PU and TPU particle mixture into the cavity of the mold; transferring the mold to a heating box, heating the mold to 60~80°C, transferring the mold after 4~8 minutes to a cooling box of -10~0°C, and rapidly cooling the mold for 2~5 minutes; thus obtaining the inner bootie 11 after de-molding;
b. upper 1: see Fig. 3, stitching the collar of the inner bootie 11 with the collar of a vamp 12 using a stitching machine according to the collar radian, and then covering the inner bootie 11 with the vamp 12 to obtain the upper 1, wherein a filling material 13 for preventing cold, absorbing shock and the like can be filled between the vamp 12 and the lining 11a according to needs; and
c. molding: producing a sole 2 using the above 1:1 mold made in the mold groove; placing the sole 2 on a specified mold groove in a PU injection mold cavity, wherein the edge of the sole 2 is tightly connected with the mold groove; then putting the upper 1 on a shoe last 4, hanging the upper 1 put on the last onto a mold base of an upper connecting injection molding machine using an air valve device, fixing the upper 1 put on the last with a pneumatic last clamping valve device, and then closing the mold; heating the mold to 60~80°C, then injecting the PU raw material into the mold cavity, foaming and curing the PU raw material for 5~8 minutes, opening the mold to take out a finished product, and trimming burrs.

The shoe making process of the present invention is simpler than the traditional shoe making process, can save the procedures of sole laying and insole assembly, and can simplify the making procedure of the upper 1. See Fig. 1, the mold kernel is designed and made according to the foot shape of human mechanics, and the inner bootie 11 is made by an integral molding process in the mold, so that the foot can be placed in a most comfortable and matchable space, and the forefoot to the heel is perfectly wrapped; and the vamp and the sole 2 are completely attached to the last, so that the wearing comfort is very good, the worn shoes and the feet of a wearer are fused into a whole, and then a barefoot feeling is realized. By changing the thickness, density, hardness and wrapping property of the inner pad 11b according to different sports functions, the inner bootie 11 achieves a maximum sports shock absorbing and assisting function and comfortably wraps the foot. Manual sole laying is not needed, so that the processing efficiency is effectively improved, the problems of glue overflow, glue insufficiency and the like caused by manual sole laying are solved, and the vamp is very clean and good in pull; and no glued layer exists between the upper 1 and the sole 2, so that the elasticity of the sole 2 is guaranteed. The thickness 4~6mm of the traditional insole is adjusted to the thickness 10~20mm of the inner pad 11b of the present invention by adjusting the radian of the keel of the PU mold, and the thicknesses of the EVA sole 2 and the RB sole sheet are reduced, so that the elasticity and the comfort of the feet in the moving process are greatly strengthened; and by reducing the consumption of EVA and RB materials and increasing the consumption of the PU material, the dissolution proportion of a pair of shoes is increased, and the environment-friendly function is effectively promoted.

Described above are merely specific embodiments of the present invention, but the design concept of the present invention is not limited thereto. All insubstantial modifications made to the present invention using the concept are the behaviors of infringing the protection scope of the present invention.

## Claims

1. A pair of comprehensive wrapping and environment-friendly shoes, each comprising an upper and a sole, wherein the upper is composed of an inner bootie and a vamp; the inner bootie is composed of a lining and an inner pad which is formed by one-step injection molding, and the lining is connected with the inner pad into a whole by injection molding; the collar of the inner bootie is fixedly connected with the collar of the vamp, and the lower edge of the vamp extends to the bottom surface of the inner pad and is fixedly connected with the inner pad.

2. The comprehensive wrapping and environment-friendly shoes of claim 1, wherein the upper is connected with the sole into a whole by a PU bridging layer, and the PU bridging layer wraps the lower edge of the vamp.

3. The comprehensive wrapping and environment-friendly shoes of claim 1, wherein the thickness of the inner pad is 10~20mm.

4. The comprehensive wrapping and environment-friendly shoes of claim 1, wherein the lining is of a foot cover structure in a sock shape, or a lining structure of a common upper.

5. The comprehensive wrapping and environment-friendly shoes of claim 1, wherein the lining is made of a waterproof and/or breathable fabric.

6. The comprehensive wrapping and environment-friendly shoes of claim 1, wherein the inner pad is a PU inner pad made of a PU material or a popcorn inner pad made of mixed PU and TPU popcorn particles.

7. A making process for comprehensive wrapping and environment-friendly shoes, wherein the making process is used for making the shoes of any of claims 1-6, and sequentially comprises the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the cavity of the mold; transferring the mold to a heating box, heating the mold to 60~80°C, transferring the mold after 4~8 minutes to a cooling box of -10~0°C, and rapidly cooling the mold for 2~5 minutes; thus obtaining the inner bootie after de-molding;
b. upper: stitching the collar of the inner bootie with the collar of a vamp using a stitching machine according to the collar radian, and then covering the inner bootie with the vamp to obtain the upper; and
c. molding: placing a sole on a specified mold groove in a PU injection mold cavity; then putting the upper on a shoe last, hanging the upper put on the last onto a mold base of an upper connecting injection molding machine using an air valve device, fixing the upper put on the last with a pneumatic last clamping valve device, and then closing the mold; heating the mold to 60~80°C, then injecting the PU raw material into the mold cavity, foaming and curing the PU raw material for 5~8 minutes, opening the mold to take out a finished product, and trimming burrs.

8. The making process for comprehensive wrapping and environment-friendly shoes of claim 7, wherein the sole is produced using a 1:1 mold according to the shape in the mold groove; and the edge of the sole is tightly connected with the mold groove.
